# EUROPÄISCHE PATENTSCHRIFT

(11) **EP 1 992 920 B1**
(45) Veröffentlichungstag und Bekanntmachung des Hinweises auf die Patenterteilung: **06.04.2016**
(21) Anmeldenummer: 07400016.7
(22) Anmeldetag: 16.05.2007
(51) Int. Cl.: G01F 23/24, G01F 23/72

(54) **Verfahren und Vorrichtung zum Bestimmen von Füllständen übereinander angeordneter Flüssigkeitsschichten**
Method and device for determining fill-levels of liquid layers arranged over each other
Procédé et dispositif destinés à la détection des états de remplissage de couches de liquides disposées les unes sur les autres

(43) Veröffentlichungstag der Anmeldung: 19.11.2008
(73) Patentinhaber: FAFNIR GmbH, D-22765 Hamburg (DE)
(72) Erfinder: Maurer, Christian, 22547 Hamburg (DE); Schrittenlacher, Wolfgang, 21075 Hamburg (DE); Kunter, Stefan, 22337 Hamburg (DE)
(74) Vertreter: UEXKÜLL & STOLBERG

(56) Entgegenhaltungen:
- EP-A- 1 067 368
- WO-A-98/28598
- US-A- 4 188 826
- US-A- 6 058 775

## Beschreibung

Die Erfindung betrifft ein Verfahren und eine Vorrichtung zum Bestimmen von Füllständen übereinander angeordneter Flüssigkeitsschichten in einem Behälter.

In vielen Prozess- und Lagerbehältern kommt es vor, dass sich aus einem Gemisch von Flüssigkeiten diejenigen Flüssigkeiten, die verschiedene Dichten aufweisen, entmischen. Ein häufiger Fall ist die Abscheidung von Ölen aus Emulsionen. Da die Dichte von Ölen geringer ist als die des Wassers, setzt sich das Wasser unten ab, und darüber befindet sich eine Ölschicht. Es kommen sehr viele andere Fälle in der Praxis vor. Für den Betreiber einer solchen Anlage ist neben dem gesamten Füllstand in vielen Fällen auch die Position der Trennschicht(en), d.h. der Grenze(n) zwischen den einzelnen Schichten, von großem Interesse.

Bei der herkömmlichen Technik sind normalerweise zwei Füllstandmesssysteme erforderlich, die eine Messung für den Gesamtfüllstand und eine Messung für die Trennschicht durchführen. Bei Füllstandmessystemen mit magnetostriktiven Drähten (siehe z.B. US 3,898,555) besteht die Möglichkeit, auch mit einem einzigen Messsystem zusätzlich zum Gesamtfüllstand eine Trennschicht mit zu erfassen, da ein solches System mehrere Schwimmer (Auftriebskörper) besitzen und in der Position erfassen kann. Die Voraussetzung dafür ist, dass an der Trennschicht der Dichteunterschied zwischen den benachbarten Flüssigkeitsschichten groß genug ist, so dass der Schwimmer auch tatsächlich stabil an der Grenze zwischen den Schichten schwimmt oder schwebt. Hierzu muß die Dichte des Schwimmers mit hoher Präzision eingestellt werden, was nicht immer erreicht werden kann. Außerdem kommt es häufiger zu einem Festhaken des Schwimmers an seiner Führung, weil die Auftriebs- und Abtriebskräfte bei geringen Dichteunterschieden jeweils sehr gering sind.

Ein Beispiel für ein magnetostriktives Füllstandmesssystem zeigt die US 6,058,775. Hierbei werden an einem in eine Flüssigkeit in einem Tank eintauchenden Rohr zwei Schwimmkörper geführt. Einer davon befindet sich an der Oberfläche der Flüssigkeit, hier Benzin, der andere unterhalb davon an einer Grenzfläche zwischen Benzin und Wasser. Jeder der Schwimmkörper weist einen Magneten auf. Im Inneren des Rohres ist ein magnetostriktiver Messdraht angeordnet, der mit einer Elektronikeinheit am oberen Ende des Rohres verbunden ist.

Aus der EP 1 067 368 A ist eine Pegelstandsmessvorrichtung bekannt, bei der auf eine in eine Flüssigkeit ragende Sonde ein Wechselspannungssignal gelegt wird. Mit Hilfe einer Messung der elektrischen Leitfähigkeit der Flüssigkeit lassen sich die Pegelmessungen verbessern.

Es ist Aufgabe der Erfindung, die Möglichkeiten zum Bestimmen von Füllständen übereinander angeordneter Flüssigkeitsschichten zu erweitern, um nicht nur den Gesamtfüllstand (obersten Pegel) der Flüssigkeiten zu erfassen, sondern auch die Grenzen (Trennschichten) zwischen benachbarten Flüssigkeitsschichten, selbst bei geringen Dichteunterschieden, und zwar in zuverlässiger und robuster Weise.

Der Begriff "Füllstand" wird hier in verallgemeinertem Sinne gebraucht. Einerseits kann er einen Pegel bedeuten, also die Höhe einer Grenze (Trennschicht) über einem festgelegten Bezugspunkt (z.B. den Gesamtfüllstand als obersten Pegel), andererseits aber auch die Dicke (Schichtdicke) einer oder auch mehrerer Flüssigkeitsschichten, also eine Differenz von Pegeln. Was jeweils gemeint ist, ergibt sich unmittelbar aus dem Zusammenhang.

Diese Aufgabe wird gelöst durch eine Vorrichtung zur Bestimmung von Füllständen übereinander befindlicher Flüssigkeitsschichten in einem Behälter mit den Merkmalen des Anspruchs 1 sowie ein mittels dieser Vorrichtung ausgeübtes Verfahren mit den Merkmalen des Anspruchs 9. Vorteilhafte Ausgestaltungen der Erfindung ergeben sich aus den Unteransprüchen.

Erfindungsgemäß werden eine mit einem oder mehreren Auftriebskörpern (Schwimmern) arbeitende magnetostriktive Positionsmessung und eine nach dem potentiometrischen Prinzip arbeitende Füllstandmessung kombiniert. Hierbei erfasst die magnetostriktive Messung mit einem Auftriebskörper z.B. den Gesamtfüllstand, also den obersten Pegel der geschichteten Flüssigkeiten, während die potentiometrische Messmethode die Schichtdikke einer elektrisch leitenden Flüssigkeitsschicht bestimmt.

Daraus ergibt sich eine Vielzahl von Kombinationsmöglichkeiten, wie aus den Unteransprüchen und den Ausführungsbeispielen ersichtlich. Bei vorteilhaften Ausführungsformen sind die Komponenten für beide Messmethoden in einer kompakten Vorrichtung integriert. Die Grenze zwischen einer elektrisch leitenden Flüssigkeit und einer elektrisch nicht leitenden Flüssigkeit kann sogar dann erfasst werden, wenn kein Dichteunterschied besteht.

Ein wichtiger Anwendungsfall der Erfindung ist die Bestimmung des Füllstands von Kraftstoff in einem Lagertank auf einer Tankstelle, wenn sich unter dem Kraftstoff eine Wasserschicht oder eine Schicht mit einer Mischung aus Alkohol und Wasser befindet, die elektrisch leitend ist. Als Kraftstoff werden hier und im Folgenden alle Flüssigkeiten bezeichnet, die sich zum Antrieb von Verbrennungskraftmaschinen und Brennstoffzellen eignen; in diesem Sinne werden also auch Reinethanol und Pflanzenöle als Kraftstoff angesehen.

Die Erfindung lässt sich jedoch generell bei einer Vielzahl von Behältern anwenden, z.B. offenen Behältern, geschlossenen Behältern, Leitungen und Kanälen, und mit einer Vielzahl unterschiedlicher Flüssigkeitssysteme.

Die magnetostriktive Füllstandmessmethode ist beispielsweise aus US 4 939 457 bekannt; siehe auch US 3 189 849 und US 3 225 312. Hierbei wird ein Stromimpuls über einen magnetostriktiven Messdraht geschickt, der z.B. in einem vertikal ausgerichteten Schutzrohr enthalten ist, das in die Flüssigkeit eintaucht. Das durch den Stromimpuls erzeugte Magnetfeld überlagert sich am Ort eines in oder an einem Auftriebskörper befindlichen Magneten mit dem des Magneten und erzeugt so einen Torsionsimpuls, der sich mit Schallgeschwindigkeit auf dem Messdraht ausbreitet. Die Laufzeit des Torsionsimpulses wird mittels einer Betriebselektronik gemessen. Daraus kann mit sehr hoher Präzision, z.B. einer Genauigkeit von 10 µm, die Position des Auftriebskörpers ermittelt werden. Mit diesem Verfahren ist auch die Erkennung von mehreren Auftriebskörpern möglich, um so außer dem Gesamtfüllstand auch die Position von Grenzen zwischen Flüssigkeitsschichten zu erfassen.

Die potentiometrische Messmethode ist detailliert in der DE 27 23 999 A1 beschrieben. Dabei taucht eine Elektrode, die einen elektrischen Widerstand bildet und in der Regel rohrartig als Sondenrohr ausgebildet ist, in die Flüssigkeit ein. Die Eintauchlänge variiert mit dem Füllstand. Wenn man einen Strom durch diese Elektrode leitet, entsteht ein Spannungsabfall in der Elektrode, und zu einer mit der Flüssigkeit elektrisch leitend in Verbindung stehenden Gegenelektrode fließen Streuströme durch die Flüssigkeit. In der Praxis benutzt man einen zeitlich veränderlichen Strom, um galvanische Effekte zu vermeiden. Unabhängig von der Größe der Leitfähigkeit der Flüssigkeit stellt sich zwischen einem Endpunkt des in die leitende Flüssigkeit eingetauchten Bereichs der Elektrode in Bezug auf die Gegenelektrode eine Potentialdifferenz ein, die dem halben Spannungsabfall entlang des eingetauchten Bereichs der Elektrode entspricht. Diese Potentialdifferenz hängt demnach linear von dem Füllstand (Schichtdicke der leitenden Flüssigkeit) ab und lässt sich durch eine Messung bestimmen, so dass dem Spannungswert ein Füllstandwert zugeordnet werden kann.

Im Stand der Technik wird die potentiometrische Messmethode so benutzt, dass sich der oben genannte Endpunkt des in die leitende Flüssigkeit eingetauchten Bereichs an einem Ende der Elektrode knapp über dem Boden des Behälters befindet und daher praktisch immer in die Flüssigkeit eintaucht. Bei der Erfindung lässt sich die potentiometrische Messmethode aber auch anwenden, wenn sich dieser Endpunkt mit variierendem Füllstand bei Anordnungen mit mehreren Flüssigkeitsschichten entlang der Elektrode verschiebt, so dass er nicht direkt als Referenzpunkt für eine Potential- oder Spannungsmessung zugänglich ist. In diesem Fall muss der Spannungsabfall zwischen diesem Endpunkt und dem für die Potential- oder Spannungsmessung als Referenzpunkt dienenden Ende der Elektrode entlang eines Bereichs der Elektrode, der nicht in die leitende Flüssigkeit eintaucht und daher nicht durch Streuströme beeinflusst wird, rechnerisch berücksichtigt werden. Dies ist möglich, wenn die Länge dieses Bereichs durch eine mit dem magnetostriktiven Positionsmesssystem erfasste Position eines Auftriebskörpers bekannt ist.

Die potentiometrische Messmethode hat sich allgemein bewährt und ist seit vielen Jahren im Einsatz. Sie ist auch in der VDI-Richtlinie 3519 dargestellt. Das Verfahren ist sehr robust und relativ unabhängig von Anhaftungen an der Elektrode, z.B. bei pastösen Füllgütern. Es eignet sich für elektrische Leitfähigkeiten im Bereich von etwa 100 nS/cm bis 1 S/cm; Leitungswasser hat typischerweise eine Leitfähigkeit von ca. 500 µS/cm.

Um eine genaue Bestimmung des Füllstands zu ermöglichen, muss der elektrische Widerstand des Sondenrohrs klein sein (z.B. im Bereich von 10 mΩ bis 100 mΩ über die Länge der Elektrode) gegen die elektrischen Widerstände in der Flüssigkeit. Andererseits ist aber auch ein merklicher Spannungsabfall entlang des Sondenrohrs erforderlich. Dies bedeutet, dass ein relativ großer Strom durch das Sondenrohr geleitet werden muss. Die im Stand der Technik verwendeten Schaltungen für die Stromquelle sind sehr voluminös und haben einen hohen Stromverbrauch. Dies ist nicht nur wegen der damit verbundenen Kosten nachteilig, sondern auch, weil häufig an der Messstelle kein Platz für derartige Schaltungen zur Verfügung steht oder eine dickere Kabelverbindung dorthin nur mit Schwierigkeiten zu erstellen ist. Daher ist bei einer vorteilhaften Ausführungsform der Erfindung der zeitlich veränderliche Strom kein üblicher Wechselstrom, sondern der Strom wird pulsartig angelegt. Dies ermöglicht es, bei sehr niedrigem mittlerem Stromverbrauch die für eine Messung erforderlichen hohen Ströme kurzzeitig bereitzustellen. Zur Anpassung an die niederohmige Elektrode kann ein Übertrager verwendet werden. Wegen des pulsartigen Stromes ist auch die Spannung zeitabhängig, die für die Potentialdifferenz zwischen Elektrode und Gegenelektrode charakteristisch ist und die den Wert für die Schichtdicke repräsentiert. Zum Zuordnen des Schichtdickenwerts wird daher der zeitliche Verlauf der Spannung ausgewertet.

Bei einer vorteilhaften Ausführungsform der Erfindung wird der zeitliche Verlauf dieser Spannung aufgezeichnet und in den Pausen zwischen aufeinanderfolgenden Strompulsen ausgewertet. Dafür können die Zeitverläufe mittels eines von einem Mikrokontroller gesteuerten Analog/Digital-Wandlers aufgezeichnet und z.B. mit Hilfe eines Mikroprozessors oder anderer Hardwarekomponenten aufbereitet und umgerechnet werden. Dabei ist das Ziel, die Spannung oder einen dafür charakteristischen Wert zu erfassen und in den gesuchten Schichtdickenwert umzuwandeln. Wie das im Einzelnen erfolgen kann, ist einem Fachmann geläufig.

Da der mittlere Stromverbrauch bei dem pulsartigen Betrieb niedrig ist, lässt sich auch eine übliche 4-20mA-Schnittstelle für die Quelle des zeitlich veränderlichen Stroms verwenden. Derartige Schnittstellen sind in der Analogtechnik weit verbreitet und dienen zum Kodieren von Messsignalen durch Ströme, so dass z.B. Messfehler durch Spannungsabfälle in Zuleitungen vermieden werden. Hiermit wird z.B. ein Messsignal von 0 % durch einen Strom von 4 mA und ein Messsignal von 100 % durch einen Strom von 20 mA codiert. Bei dem erfindungsgemäßen Verfahren wird die Benutzung einer 4-20 mA-Schnittstelle dadurch ermöglicht, dass der Strom bei dem pulsartigen Betrieb durch ein entsprechendes Tastverhältnis in ausreichendem Maße reduziert wird. Die Vorteile bei der praktischen Umsetzung sind erheblich. Insbesondere sind nur zwei Adern zu der Steuer- und Auswerteelektronik zu legen, durch die keine großen Ströme fließen müssen.

In dem erfindungsgemäßen Verfahren kann, gesteuert durch einen in der Betriebselektronik vorhandenen Mikroprozessor, abwechselnd ein Strompuls über den magnetostriktiven Messdraht und dann durch die Elektrode geschickt werden. Dabei lässt sich ein gemeinsamer Rückdraht benutzen. Die Pulselektronik kann für beide Messmethoden weitgehend identisch sein. Damit können abwechselnd und unabhängig voneinander die Füllstandsignale für die Position(en) der Grenze(n) und die Schichtdicke der elektrisch leitenden Flüssigkeitsschicht gewonnen werden.

Wenn eine für die Potentialdifferenz zwischen einem der Enden der Elektrode und der Gegenelektrode charakteristische erste Spannung und eine für die Potentialdifferenz zwischen dem anderen Ende der Elektrode und der Gegenelektrode charakteristische zweite Spannung bestimmt werden, lassen sich aus dem Vergleich der ersten Spannung mit der zweiten Spannung Schlüsse auf die Einbaulage der Elektrode ziehen, insbesondere ob die Elektrode von oben (was in der Regel der Fall ist) oder von unten (was manchmal zwingend ist) in die Flüssigkeit eingeführt ist; gelegentlich ist dies nämlich nicht bekannt.

Mit der gleichen Konfiguration wie für die potentiometrische Messmethode lässt sich zusätzlich der Übergangswiderstand zwischen der in die leitfähige Flüssigkeit eingetauchten Elektrode und der Gegenelektrode bestimmen. Da die Geometrie und der Füllstand (Schichtdicke) der leitenden Flüssigkeitsschicht bekannt sind, kann daraus die elektrische Leitfähigkeit der Flüssigkeit ermittelt werden. In vielen Fällen ist dies ein wichtiger Prozessparameter. Die Betriebselektronik kann z.B. mit einer digitalen Schnittstelle versehen werden, über die sich die für eine Auswertung erforderlichen zusätzlichen Informationen übertragen lassen. Dies könnte z.B. das auf das Ausgangssignal einer 4-20mA-Schnittstelle aufgeprägte Hart-Protokoll sein, wobei das 4-20mA-Signal den Gesamtfüllstand darstellen kann. Umrechnungs- oder Auswertungsschritte können aber auch auf einem externen Rechner durchgeführt werden.

Auf einer Tankstelle können aus einer Bestimmung der elektrischen Leitfähigkeit verschiedene Rückschlüsse gezogen werden:
Wenn der in einem Behälter (Lagertank) befindliche Kraftstoff Ethanol enthält, lässt sich der Ethanolanteil und somit die Qualität des Kraftstoffs aus der elektrischen Leitfähigkeit ersehen. Eine Voraussetzung ist hierbei, dass am Behälterboden keine Wasser- oder Ethanol/Wasser-Gemischphase erkannt wird (denn Wasser würde aus dem darüber befindlichen Kraftstoff Ethanol herausziehen und damit das Ergebnis für den Kraftstoff verfälschen). In diesem Fall gilt der Übergangswiderstand und damit die daraus abgeleitete elektrische Leitfähigkeit (spezifischer Leitwert) für die gelagerte Flüssigkeit. Der Leitwert von technischem Ethanol mit einem Wassergehalt von weniger als 1% beträgt ca. einige µS/cm. Durch Beimischung von alkoholfreiem Kraftstoff zum Ethanol sinkt dieser Leitwert in definierter Weise ab. Er beträgt z.B. für den Kraftstoff "E85" etwa 4 µS/cm. Reiner Kraftstoff ohne Alkohol ist praktisch nicht leitfähig. Die Werte liegen dann im pS/cm-Bereich. Somit lässt sich aus dem Parameter elektrische Leitfähigkeit eine Aussage über den Ethanolanteil gewinnen.

Ferner ist es bekannt, dass ethanolhaltige Kraftstoffe eine Löslichkeit für Wasser besitzen. Dieser Wasseranteil ist jedoch aus eichrechtlichen Gründen nicht zulässig und auch deshalb unerwünscht, weil ein Wasseranteil bei der Verbrennung zur Bildung von Ameisensäure führt, die im Inneren des Motors Korrosion hervorruft. Die Löslichkeit von Wasser beträgt in "E85" über 5% und in "E5" ca. 0,2% sowie in "E10" ca. 0,3%. Die Werte für andere Mischungen liegen entsprechend dazwischen. Wird nun zu einer bestimmten Ethanol/KraftstoffMischung z.B. Wasser in Betrugsabsicht beigemischt, dann steigt die Leitfähigkeit, bezogen auf die Leitfähigkeit der unverwässerten Kraftstoffmischung, deutlich an. Wenn in ein Auswertesystem der Sollwert für die elektrische Leitfähigkeit oder der Typ des gelagerten Kraftstoffs eingegeben ist, kann das Auswertesystem die gemessene elektrische Leitfähigkeit mit dem Sollwert vergleichen und das Ergebnis (gegebenenfalls nach einer weiteren Auswertung, z.B. für eine Angabe des Wasseranteils) signalisieren und bei Bedarf einen Alarm abgeben.

Bei einer vorteilhaften Ausgestaltung der Erfindung ist die Elektrode als Führungsrohr für den mindestens einen Auftriebskörper gestaltet, wobei der Messdraht des magnetostriktiven Positionsmesssystems durch den Innenraum der Elektrode geleitet ist. Die elektrische Verbindung zu dem vorzugsweise in die Flüssigkeit eintauchenden Ende der Elektrode, das als Referenzpunkt für die Spannungsmessung dient und über das der zeitlich veränderliche Strom in die Elektrode eingespeist wird, wird vorzugsweise auch als Rückführung für den Messdraht des magnetostriktiven Positionsmesssystems verwendet (Rückdraht, siehe oben).

Das magnetostriktive Positionsmesssystem hat eine erste Betriebselektronik und das potentiometrische Messsystem eine zweite Betriebselektronik. Wie bereits angedeutet, können zumindest ein Teil der ersten Betriebselektronik und zumindest ein Teil der zweiten Betriebselektronik identisch sein. Vorteilhaft ist es, wenn zumindest ein Teil der ersten Betriebselektronik und zumindest ein Teil der zweiten Betriebselektronik in einem gemeinsamen Gehäuse untergebracht sind. Dieses Gehäuse ist vorzugsweise außerhalb des Behälters angeordnet, zum Beispiel jenseits einer elektrisch isolierenden Durchführung durch die Wandung des Behälters. Dabei kann eine sich durch die Durchführung erstreckende Halterung als mechanische Verbindung zwischen einem Ende der Elektrode und dem gemeinsamen Gehäuse dienen. Eine derartige Gestaltung ist sehr kompakt, enthält die meisten Komponenten der Vorrichtung und lässt sich leicht montieren.

Als Gegenelektrode kann die Behälterwandung verwendet werden. Das setzt voraus, dass die Behälterwandung elektrisch leitfähig ist und in elektrisch leitendem Kontakt zu der elektrisch leitenden Flüssigkeitsschicht steht. Relativ einfach in der Handhabung ist auch eine stabförmige Gegenelektrode, die vorzugsweise parallel zu der Elektrode angeordnet ist und zum Beispiel mittels einer separaten Durchführung in den Behälter eingesetzt sein kann. Eine zumindest weitgehend symmetrische Feldverteilung ergibt sich bei einer rohrförmigen Gegenelektrode, die konzentrisch zu der Elektrode ausgerichtet ist.

Eine kompakte Baueinheit, die bereits die Gegenelektrode enthält, ist ebenfalls denkbar. Dabei ist zum Beispiel die Gegenelektrode als Führungsrohr für den mindestens einen Auftriebskörper gestaltet, wobei die Wandung der Gegenelektrode durchbrochen ist, um den Zutritt von Flüssigkeit zu der im Innenraum der Gegenelektrode und vorzugsweise konzentrisch dazu angeordneten Elektrode zu gewährleisten, die rohrförmig gestaltet ist und in ihrem Innenraum den Messdraht des magnetostriktiven Positionsmesssystems enthält.

Im Folgenden wird die Erfindung anhand von Ausführungsbeispielen weiter erläutert. Die Figuren zeigen in
- Figur 1: eine schematische Ansicht einer Ausführungsform der erfindungsgemäßen Vorrichtung zur Bestimmung von Füllständen übereinander angeordneter Flüssigkeitsschichten in einem Behälter,
- Figur 2: in Teil (a) ein schematisches Schaltbild, das den Potentialverlauf längs der in eine elektrisch leitende Flüssigkeitsschicht eintauchenden Elektrode der Vorrichtung veranschaulicht, und in Teil (b) dasselbe Schaltbild anders gezeichnet,
- Figur 3: einen schematischen Schaltplan bei einer Ausführungsform der erfindungsgemäßen Vorrichtung in der Funktion zur Messung der Schichtdicke der elektrisch leitenden Flüssigkeit,
- Figur 4: den Schaltplan aus Figur 3 in der Funktion zur Bestimmung der elektrischen Leitfähigkeit der elektrisch leitenden Flüssigkeit,
- Figur 5: eine schematische Ansicht einer praktischen Ausführungsform der erfindungsgemäßen Vorrichtung bei der Messung der Füllstände von zwei Flüssigkeitsschichten,
- Figur 6: die Ausführungsform aus Figur 5 in schematischer Ansicht bei Einbau in einen Behälter von unten und
- Figur 7: eine schematisch Ansicht einer weiteren Ausführungsform der erfindungsgemäßen Vorrichtung bei der Messung der Füllstände von drei Flüssigkeitsschichten.

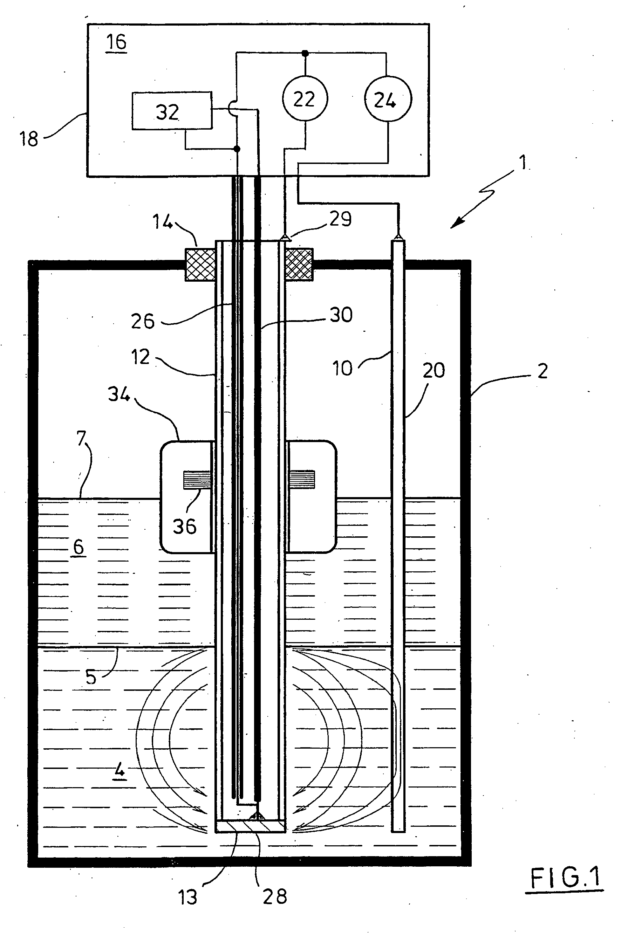

Die Figur 1 veranschaulicht in schematischer Weise eine Vorrichtung 1 zum Bestimmen von Füllständen übereinander angeordneter Flüssigkeitsschichten in einem Behälter 2.

In dem Ausführungsbeispiel gemäß Figur 1 befindet sich in dem Behälter 2 zuunterst eine elektrisch leitende Flüssigkeit 4 mit einem durch eine Grenze 5 gegebenen Füllstand. Die Schichtdicke oder der Pegel der leitenden Flüssigkeit 4 ist also durch die Position der Grenze 5 bestimmt. Oberhalb der leitenden Flüssigkeit 4 befindet sich eine nicht leitende Flüssigkeit 6, die von der Grenze 5 bis zu einem Gesamtfüllstand 7 reicht.

In die Flüssigkeiten 4, 6 taucht von oben eine als Rohr gestaltete Elektrode 10 ein, auch als "Sondenrohr" bezeichnet, die fast bis zum Boden des Behälters 2 reicht. Die Elektrode 10 bildet einen elektrischen Widerstand, und dessen Widerstandswert ist erheblich kleiner als der elektrische Widerstand der leitenden Flüssigkeit 4 zwischen der Elektrode 10 und einer Gegenelektrode, aber andererseits so groß, dass sich längs der Elektrode 10 ein Spannungsabfall einstellen kann. Ein typischer Wert für den Widerstand längs der Elektrode 10 liegt im Bereich von 10 mΩ bis 100 mΩ, aber andere Zahlenwerte sind ebenfalls möglich.

In der in Figur 1 gezeigten Ausführungsform ist die Elektrode 10 als längliches Rohr (Mantelfläche 12) mit einem Boden 13 ausgebildet. Das obere Ende der Elektrode 10 ist über eine isolierte Durchführung 14 mit dem Behälter 2 verbunden. Außerhalb des Behälters 2 ist eine Betriebselektronik 16 mit einem Gehäuse 18 angeordnet, das über ein in Figur 1 nicht dargestelltes Zwischenstück mit dem oberen Ende der Elektrode 10 verbunden ist. Im Ausführungsbeispiel ist die Elektrode 10 elektrisch isoliert in das Gehäuse 18 hineingeführt, während das Zwischenstück in seinem äußeren Bereich eine metallische Verbindung zwischen dem Behälter 2 und dem Gehäuse 18 darstellt.

Parallel zu der Elektrode 10 verläuft innerhalb des Behälters 2 eine Gegenelektrode 20, die eine hohe elektrische Leitfähigkeit hat und daher eine Äquipotentialfläche definiert, die sich vorzugsweise auf Erdpotential befindet. Im Ausführungsbeispiel ist die Gegenelektrode 20 als Stab gestaltet, der parallel zu der Elektrode 10 ausgerichtet ist. Andere Bauformen für die Gegenelektrode 20 sind ebenfalls denkbar, z.B. als konzentrisch zu der Elektrode 10 angeordnetes Rohr. Auch die Wandung des Behälters 2 kann als Gegenelektrode geschaltet werden, wenn sie metallisch ist und mit der Flüssigkeit 4 in elektrisch leitendem Kontakt steht.

Die Elektrode 10 ermöglicht die Bestimmung der Schichtdicke der elektrisch leitenden Flüssigkeit 4 mit einer potentiomebarischen Messmethode (siehe z.B. DE 27 23 999 A1), wie weiter unten ausführlich erläutert. Dazu enthält die Betriebselektronik 16 eine Stromquelle 22, mit der ein zeitlich veränderlicher Strom über die Elektrode 10 geleitet werden kann. Eine dabei auftretende Spannung, die für die Potentialdifferenz zwischen einem Ende der Elektrode 10 und der Gegenelektrode 20 charakteristisch ist, wird mit einem (ersten) Spannungsmesser 24 erfasst. Im Ausführungsbeispiel misst der Spannungsmesser 24 direkt die Spannung zwischen dem Boden 13 der Elektrode 10 und der Gegenelektrode 20. Dazu führt vom Boden 13 der Elektrode 10 ein elektrisch isolierter Rückdraht 26 in die Betriebselektronik 16. Der Boden 13 bildet das mit 28 bezeichnete untere Ende der Elektrode 10, das bis zu sehr niedrigen Füllständen in die elektrisch leitende Flüssigkeit 4 eintaucht. Das obere Ende der Elektrode 10 liegt bei 29.

Die bisher beschriebenen Komponenten der Betriebselektronik 16 sowie weitere, dem Fachmann geläufige Komponenten wie z.B. ein Mikroprozessor, bilden eine erste Betriebselektronik, die bei der Durchführung der potentiometrischen Messmethode verwendet wird. Daneben enthält das Gehäuse 18 weitere Komponenten, eine zweite Betriebselektronik, die bei einem magnetostriktiven Positionsmesssystem zum Einsatz kommt. Die Unterscheidung zwischen erster und zweiter Betriebselektronik ist rein terminologisch, da manche Bausteine identisch ausgeführt sein können. Im Folgenden wird daher nur noch die Bezeichnung "Betriebselektronik" benutzt.

Wie ein magnetostriktives Positionsmesssystem aufgebaut ist, ist einem Fachmann geläufig. Die Grundzüge davon sind z.B. in den eingangs erwähnten Schriften beschrieben. Im Ausführungsbeispiel weist das in der Vorrichtung 1 vorgesehene magnetostriktive Messsystem einen Messdraht 30 auf, der von der Betriebselektronik 16 ausgeht und sich durch den Innenraum der Elektrode 10 bis zu deren Boden 13 erstreckt. Als Rückführung für den Messdraht 30 wird der Rückdraht 26 benutzt. Die Steuerung des magnetostriktiven Messsystems und die Auswertung der Messsignale findet zumindest teilweise in den mit 32 bezeichneten Komponenten der Betriebselektronik 16 statt.

Im Ausführungsbeispiel gemäß Figur 1 schwimmt ein AuftriebsKörper 34 auf der elektrisch nicht leitenden Flüssigkeit 6. Ein in seinem Innenraum eingebauter Magnet 36 beeinflusst ein über den Messdraht 30 laufendes Stromsignal, was eine Messung des Gesamtfüllstands 7 mit hoher Genauigkeit ermöglicht, wie eingangs erläutert.

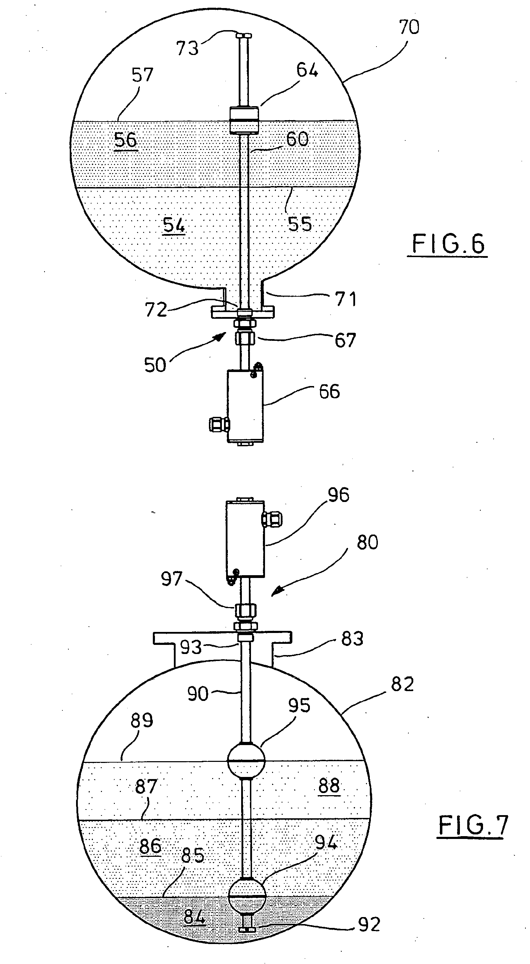

Als Metallteil kann der Magnet 36 im Prinzip die Streufelder und Streuströme in der elektrisch leitenden Flüssigkeit 4 beeinflussen. Gleiches gilt für das Gehäuse des Auftriebskörpers 34, falls dieses Gehäuse aus Metall gefertigt ist. Bei geringer Schichtdicke der nicht leitenden Flüssigkeit 6 oder falls - in einem anderen Ausführungsbeispiel - der Auftriebskörper auf der elektrisch leitenden Flüssigkeit schwimmt, sind derartige Störeffekte relativ stärker. Im Wesentlichen werden die Streufelder bzw. -ströme so verzerrt, dass sich die von dem Spannungsmesser 24 erfasste Spannung verschiebt. Man kann die Störeffekte durch eine flache Bauform des Auftriebskörpers 34 minimieren. Eine andere Möglichkeit besteht darin, die durch diese Störeffekte hervorgerufenen Messfehler in der Auswertung mit zu berücksichtigen. Dies kann z.B. mit Hilfe von Kalibrierungsmessungen erfolgen, um so z.B. die an dem Spannungsmesser 24 anliegende Spannung in Abhängigkeit von der Position des Auftriebskörpers 34 (also in Abhängigkeit von der relativen Menge der durch den Störeffekt beeinflussten elektrisch leitenden Flüssigkeit) zu korrigieren. Eine ähnliche Betrachtung gilt für weitere Auftriebskörper, die sich an einer jeweiligen Grenze zwischen zwei Flüssigkeitsschichten befinden (siehe z.B. Figur 7).

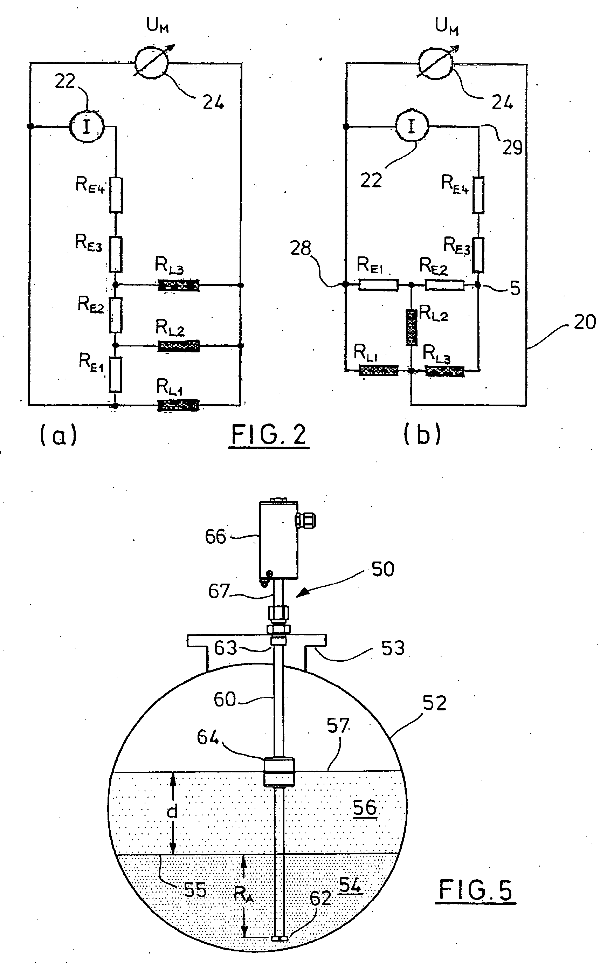

Die Figur 2 veranschaulicht die Wirkungsweise einer Füllstand- bzw. Schichtdickenmessung für die elektrisch leitende Schicht genauer. Teil (a) zeigt ein Prinzipschaltbild der Anordnung aus Figur 1. Der Widerstand der Elektrode 10 ist als Serie von vier Widerständen R_{E1} bis R_{E4} dargestellt, wobei sich R_{E1} und R_{E2} in der leitenden Flüssigkeit 4 befinden und R_{E1} = R_{E2}. R_{E3} ist der Widerstand der Elektrode 10 im Bereich der nicht leitenden Flüssigkeit 6 und R_{E4} der Widerstand oberhalb des Gesamtfüllstands 7. Da die Flüssigkeit 4 elektrisch leitend ist, fließen Streuströme durch die Flüssigkeit 4, z.B. von der Elektrode 10 zur Gegenelektrode 20. Diese Streuströme sind in Figur 1 durch Linien veranschaulicht, die auch den Verlauf des elektrischen Feldes darstellen. In Figur 2 (a) ist der elektrische Widerstand der Flüssigkeit 4 durch drei Ohmsche Widerstände R_{L1} bis R_{L3} repräsentiert. Bei einem symmetrischen Stromverlauf ist R_{L1} = R_{L3}.

In Figur 2 (b) ist das Schaltbild aus Figur 2(a) in etwas anderer Darstellung nochmals gezeichnet. Daran erkennt man, dass die von dem Spannungsmesser 24 gemessene Spannung gleich dem halben Spannungsabfall längs der Elektrode 10 in dem in die Flüssigkeit 4 eintauchenden Bereich ist, denn durch den Widerstand R_{L2} fließt aus Symmetriegründen kein Strom.

In der DE 27 23 999 A1 sind bei der Erläuterung der Funktionsweise der Füllstandmessung auch die Widerstände der Zuleitungen berücksichtigt. Der Einfluss der Widerstände der Zuleitungen kann auch dadurch vermieden werden, dass zusätzliche Messleitungen an die Punkte 28 und 29 geführt werden. Damit lässt sich der Spannungsverlauf an den Elektrodenenden direkt bestimmen, und die Messwerte können damit korrigiert werden (Vierleitertechnik). Die mittels des Spannungsmessers 24 bestimmte Spannung variiert linear mit dem Füllstand. Dieser Spannung kann daher ein Füllstandwert bzw. ein Schichtdickenwert zugeordnet werden. Die dafür erforderlichen Parameter lassen sich am einfachsten durch Kalibrierungsmessungen ermitteln.

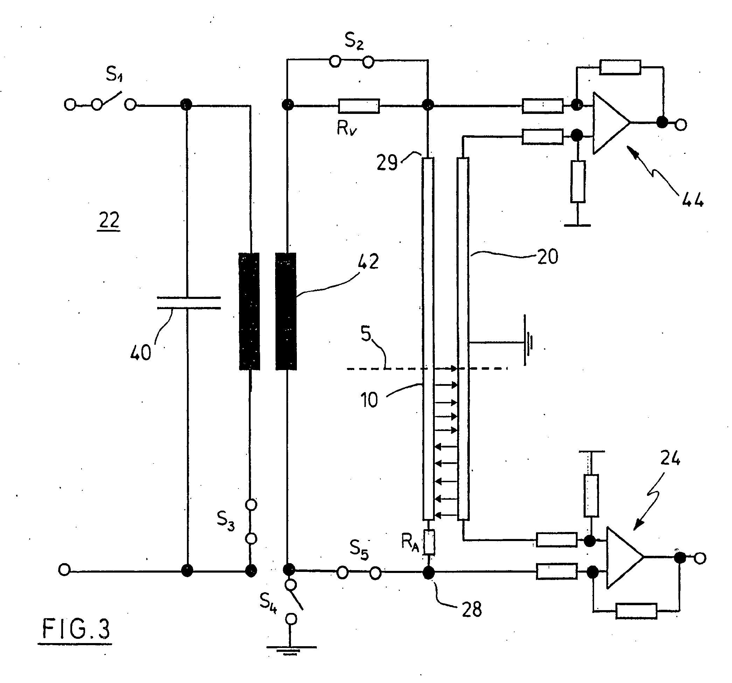

Bei herkömmlichen Vorrichtungen erzeugt eine der Stromquelle 22 entsprechende Stromquelle einen Wechselstrom. Erfindungsgemäß wird jedoch mittels der Stromquelle 22 kein üblicher Wechselstrom angelegt, sondern es erfolgt ein pulsartiger Betrieb. Dies wird anhand des Schaltbilds in Figur 3 erläutert.

Zunächst sind in Figur 3 die Elektrode 10 mit dem unteren Ende 28 und dem oberen Ende 29 sowie die Gegenelektrode 20 (die auf Erdpotential liegt) zu erkennen. Bis zu der Grenze 5 fließen Streuströme in der Flüssigkeit 4, wie durch die Pfeile unterhalb der Grenze 5 angedeutet. Bei der Anordnung gemäß Figur 1 ist R_{A} = 0. Bei anderen Anordnungen kann R_{A} > 0 sein. R_{A} ist der Widerstand der Elektrode 10 zwischen deren unterem Ende 28 und der unteren Grenze der elektrisch leitenden Flüssigkeit. Da die Spannung zur Gegenelektrode 20 gegen das untere Ende 28 der Elektrode 10 als Referenzpunkt und nicht in Bezug auf die untere Grenze der elektrisch leitenden Flüssigkeit gemessen wird (wie es eigentlich erforderlich wäre), muss der durch R_{A} ausgedrückte Spannungsabfall bei der Auswertung berücksichtigt werden. Dies ist ohne weiteres möglich, da R_{A} z.B. über die Position eines Auftriebskörpers (Fig. 7) bestimmt werden kann.

In der in Figur 3 gezeigten Betriebsart ist der Schalter S₄ permanent geöffnet, während die Schalter S₂ (zum Kurzschließen des Widerstandes R_{V}) und S₅ permanent geschlossen sind. Bei geöffnetem Schalter S₃ und geschlossenem Schalter S₁ wird ein Kondensator 40 aufgeladen und dann der Schalter S₁ geöffnet. Wenn nun der Schalter S₃ schließt, erfolgt ein Strompuls, der mittels eines Übertragers 42 durch die Elektrode 10 geleitet wird und dabei für den oben erläuterten Spannungsabfall sorgt. Die für die Potentialdifferenz zwischen dem unteren Ende 28 der Elektrode 10 und der Gegenelektrode 20 charakteristische (erste) Spannung wird mit dem (ersten) Spannungsmesser 24 bestimmt, der in Figur 3 als Operationsverstärker mit zugeordneten Widerständen ausgeführt ist.

Eine zu der ersten Spannung komplementäre zweite Spannung zwischen dem zweiten Ende 29 der Elektrode 10 und der Gegenelektrode 20 kann mit einem zweiten Spannungsmesser 44 bestimmt werden, der ebenfalls als Operationsverstärker mit zugehörigen Widerständen ausgestaltet ist.

Abgesehen von der Elektrode 10 und der Gegenelektrode 20 befinden sich die in Figur 3 dargestellten Bauteile bei vorteilhaften Ausführungsformen in einer gemeinsamen Baugruppe in einem gemeinsamen Gehäuse, das auch noch weitere Komponenten enthalten kann und in Figur 1 mit 18 bezeichnet ist (Betriebselektronik).

Bei vorteilhaften Ausführungsformen wird der Kondensator 40 über eine 4-20mA-Schnittstelle aufgeladen. Obwohl dabei nur ein relativ geringer Ladestrom möglich ist, kann wegen des pulsartigen Betriebs der Stromquelle mittels des Übertragers 42 ein großer Strom durch die Elektrode 10 geleitet werden. Dieser Strom und somit die erste und die zweite Spannung sind ebenfalls pulsartig. Die an Ausgängen der Operationsverstärker des ersten Spannungsmessers 24 und des zweiten Spannungsmessers 44 bereitgestellten Spannungswerte werden in ihrem zeitlichten Verlauf aufgezeichnet und können in den Pausen zwischen aufeinanderfolgenden Strompulsen ausgewertet werden. Diese Schritte finden vorzugsweise ebenfalls in der Betriebselektronik statt.

Als Ausgangssignal gibt die Betriebselektronik den gemessenen Füllstand (also z.B. die gemessene Schichtdicke der elektrisch leitenden Flüssigkeit oder auch einen Pegel) ab, z.B. als Rohdaten in analoger oder digitaler Form oder bereits umgerechnet in eine Höhenangabe, gegebenenfalls unter Verwendung von Kalibrierungsdaten.

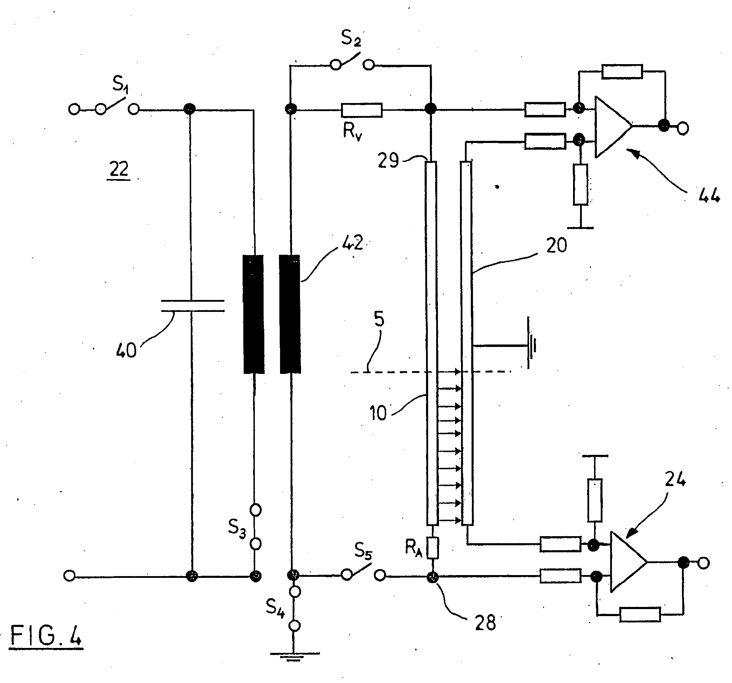

Die Vorrichtung 1 kann auch zur Bestimmung der elektrischen Leitfähigkeit der Flüssigkeit 4 verwendet werden. Ein Beispiel für eine Schaltung, die dies ermöglicht, ist in Figur 4 dargestellt. Die Schaltung gemäß Figur 4 hat große Ähnlichkeit mit der gemäß Figur 3 und ist im Ausführungsbeispiel durch Umstellen der Schalter S₂, S₄ und S₅ realisiert. Ein durch Betätigen der Schalter S₁ und S₃ erzeugter Strompuls bewirkt an der Sekundärseite des Übertragers 42 einen Spannungspuls, der wegen des geschlossenen Schalters S₄ auf Erdpotential bezogen ist. Der Spannungspuls fällt an vier in Reihe geschalteten Widerständen ab, nämlich dem Widerstand R_{V}, dem Widerstand der Elektrode 10, dem Widerstand der elektrisch leitenden Flüssigkeit 4 zwischen der Elektrode 10 und der Gegenelektrode 20 und dem Widerstand der Gegenelektrode 20. Letzterer ist vernachlässigbar klein, und im Vergleich zum Widerstand der Flüssigkeit kann auch der Widerstand der Elektrode 10 vernachlässigt werden. Der Spannungsabfall über die Flüssigkeit wird mit Hilfe des ersten Spannungsmessers 24 und/oder des zweiten Spannungsmessers 44 bestimmt. Ferner wird noch die Gesamtspannung an der Sekundärseite des Übertragers 42 oder alternativ der Spannungsabfall über den Widerstand R_{V} als Maß für den durch die Flüssigkeit fließenden Strom bestimmt (was in Figur 4 nicht eingezeichnet ist).

Im Ausführungsbeispiel werden die Schalterstellungen über die Betriebselektronik gesteuert, und auch die Aufzeichnung der zeitabhängigen Spannungswerte und deren Auswertung in den Pausen zwischen den Pulsen erfolgt in der Betriebselektronik.

Um aus den gemessenen Werten für die an der Flüssigkeit anliegende Spannung und den durch die Flüssigkeit fließenden Strom die elektrische Leitfähigkeit der Flüssigkeit zu bestimmen, ist auch eine Information über die Feldverteilung zwischen der Elektrode 10 und der Gegenelektrode 20 erforderlich. Bei der in Figur 1 gezeigten Geometrie ist die Feldverteilung komplizierter als bei einer konzentrischen Anordnung, in der die Gegenelektrode eine zylindrische Elektrode zylinderartig umgibt. In die Bestimmung der elektrischen Leitfähigkeit geht auch die Schichtdicke der elektrisch leitenden Flüssigkeit 4 ein, da die Querschnittsfläche, durch die der Strom durch die Flüssigkeit fließt, mit der Schichtdicke wächst. Die Schichtdicke kann in einer unabhängigen Messung in der zuvor erläuterten Weise ermittelt werden.

In Figur 5 ist eine für die Praxis besonders vorteilhafte Ausführungsform einer Vorrichtung 50 zur Bestimmung von Füllständen übereinanderangeordneter Flüssigkeitsschichten gezeigt. Die Vorrichtung 50 ist bei einem Behälter 52 an einem Dom 53 montiert. In dem Behälter 52 befindet sich eine untere Flüssigkeit 54 mit einer oberen Grenze 55, über der eine obere Flüssigkeit 56 geschichtet ist, so dass sich ein Gesamtfüllstand 57 ergibt.

Für die potentiometrische Messmethode ist eine Elektrode 60 mit einem unteren Ende 62 knapp über dem Behälterboden und einem oberen Ende 63 vorgesehen. Die Elektrode 60 dient gleichzeitig als Führungsrohr für einen Auftriebskörper 64 mit einem Magneten für das magnetostriktive Positionsmesssystem.

Ein Gehäuse 66 mit der Betriebselektronik oder wesentlichen Teilen der Betriebselektronik ist außerhalb des Behälters 52 angeordnet und über ein Zwischenstück 67 mit der Elektrode 60 und den innerhalb der Elektrode 60 angeordneten Teilen verbunden. Ferner muss eine Gegenelektrode vorhanden sein. In der Darstellung ist keine zusätzliche Gegenelektrode eingezeichnet, da der Behälter 52 eine metallische Wandung hat, die als Gegenelektrode wirkt.

Wenn die untere Flüssigkeit 54 elektrisch leitend ist und die obere Flüssigkeit 56 nicht leitend ist, entspricht die Ausführungsform gemäß Figur 5 der Anordnung gemäß Figur 1.

Ein wichtiger Anwendungsfall davon ist die Messung von Füllständen in einem Lagertank für Kraftstoff auf einer Tankstelle. In diesem Fall ist die obere Flüssigkeit 56 der zu lagernde Kraftstoff. In der Praxis gelangt jedoch auch Wasser in den Lagertank, das spezifisch schwerer ist als der Kraftstoff und sich in dem Kraftstoff nur in sehr geringem Ausmaß löst, so dass sich unter dem Kraftstoff 56 eine Wasserschicht 54 ansammelt. Wasser ist elektrisch leitfähig und kann mit der potentiometrischen Messmethode problemlos erfasst werden. Ein besonderer Vorteil der Anordnung gemäß Figur 5 besteht darin, dass kein Trennschichtschwimmer an der Grenze 55 benötigt wird, also kein Auftriebskörper, der aufgrund seiner Baugröße bis zu einem bereits relativ hohen Pegel (Grenze 55) des Wassers (untere Flüssigkeit 54) auf dem Boden des Behälters 52 aufliegen würde. Wenn sich das untere Ende 62 der Elektrode 60 knapp über dem Behälterboden befindet, können also bereits sehr geringe Pegel einer Wasserschicht erfasst werden.

Bei der potentiometrischen Messung ergibt sich nur ein Signal, wenn eine leitfähige Flüssigkeit mit einer Mindestleitfähigkeit von ca. 100 nS/cm vorhanden ist. Wenn nun der gesamte Inhalt des Behälters 52 aus einem Kraftstoff besteht, der praktisch nicht leitend ist, wird erkannt, dass keine Trennschicht existiert, also keine Grenze 55 vorliegt.

Die Figur 6 zeigt eine Anordnung, in der die Vorrichtung 50 aus Figur 5 von unten in einen Behälter 70 eingeführt ist und an einem im Bodenbereich des Behälters 70 befindlichen Stutzen 71 montiert ist. In Bezug auf die Anwendung der Vorrichtung 50 ist der einzige Unterschied zu der Anordnung gemäß Figur 5, dass sich nun das untere Ende 72 der Elektrode 60 in der Nähe des Gehäuses 66 befindet und das obere Ende 73 am freien Ende der Elektrode 60.

Wenn bei der Anordnung aus Figur 6 die untere Flüssigkeit 54 wiederum elektrisch leitend ist und die obere Flüssigkeit 56 nicht leitend, ist das in der Nähe des Gehäuses 66 befindliche Ende 72 der Elektrode 60 ständig in die elektrisch leitende Flüssigkeit 54 eingetaucht. In Bezug auf die Schaltung gemäß Figur 3 bedeutet dies, dass nicht der erste Spannungsmesser 24, sondern der zweite Spannungsmesser 44 die für die Schichtdicke der elektrisch leitenden Flüssigkeit 54 maßgebliche Spannung bzw. Potentialdifferenz zu der Gegenelektrode erfasst. Wie man an Figur 3 sieht, sind die an dem ersten Spannungsmesser 24 und an dem zweiten Spannungsmesser 44 anliegenden Spannungen komplementär zueinander.

Aus dem Vergleich des Spannungsverlaufs an dem ersten Spannungsmesser 24 und an dem zweiten Spannungsmesser 44 kann man umgekehrt die Einbaulage der Vorrichtung 50 erschließen, falls man diese nicht kennen sollte.

Die Anordnung gemäß Figur 5 (und anlog die gemäß Figur 6) kann auch verwendet werden, wenn die elektrisch leitende Flüssigkeit die obere Flüssigkeit 56 ist, während die untere Flüssigkeit 54 elektrisch nicht leitfähig ist. In diesem Fall wird die für die Potentialdifferenz zwischen dem unteren Ende 62 der Elektrode 60 und der Gegenelektrode charakteristische Spannung mit dem ersten Spannungsmesser 24 in Figur 3 bestimmt. Daraus lässt sich jedoch nicht direkt die Schichtdicke d der elektrisch leitenden Flüssigkeit 56 ermitteln, sondern es muss der Spannungsabfall längs der Elektrode 10 zwischen dem unteren Ende 62 und der Grenze 55 berücksichtigt werden. Dieser Spannungsabfall ist durch den Widerstand R_{A} repräsentiert, der auch in Figur 3 eingezeichnet ist. Der Messwert am ersten Spannungsmesser 24 entspricht somit dem Spannungsabfall längs R_{A} plus dem Spannungsabfall entlang der Elektrode 10 über eine Länge d/2 (halbe Schichtdicke gemäß der potentiometrischen Messmethode). Andererseits kann R_{A} als Länge ausgedrückt werden und liefert so die Position der Grenze 55, woraus man durch Addition von d den Gesamtfüllstand 57 erhält, dessen Position von dem Auftriebskörper 64 mit Hilfe des magnetostriktiven Messsystems erfasst wird. Mit anderen Worten, man erhält ein lineares Gleichungssystem mit den Unbekannten d und R_{A}, das leicht gelöst werden kann. Die Messwerte für den Gesamtfüllstand 57 und die Spannung am ersten Spannungsmesser 24 liefern somit die gesuchten Schichtdicken der unteren Flüssigkeit 54 und der oberen Flüssigkeit 56.

Alternativ könnte man bei der Anordnung gemäß Figur 5 anstelle des ersten Spannungsmessers 24 den zweiten Spannungsmesser 44 nutzen, der eine für die Potentialdifferenz zwischen dem oberen Ende 63 der Elektrode 60 und der Gegenelektrode charakteristische Spannung erfasst. Diese Spannung entspricht dem Spannungsabfall entlang der Elektrode 60 zwischen dem oberen Ende 63 und der Position des Auftriebskörpers 64 plus dem Spannungsabfall gemäß der potentiometrischen Messmethode entsprechend d/2. Mit Hilfe der Position des Auftriebskörpers 64 lassen sich daraus wiederum die Schichtdicke d und die Position der Grenze 55 ermitteln.

Die Figur 7 zeigt eine Anordnung mit drei Flüssigkeitsschichten. Hierbei wird eine Vorrichtung 80 benutzt, die am Dom 83 eines Behälters 82 befestigt ist. Im Ausführungsbeispiel ist eine untere Flüssigkeit 84 mit einer oberen Grenze 85 nicht leitfähig, eine darüber geschichtete mittlere Flüssigkeit 86 mit einer oberen Grenze 87 ist elektrisch leitfähig. Eine darüber befindliche obere Flüssigkeit 88 ist wiederum nicht leitfähig. Der Gesamtfüllstand ist mit 89 bezeichnet.

Eine Elektrode 90 mit einem unteren Ende 92 und einem oberen Ende 93 zur Durchführung der potentiometrischen Messmethode dient gleichzeitig als Führungsrohr für einen unteren Auftriebskörper 94 und eine oberen Auftriebskörper 95.

Das magnetostriktive Positionsmesssystem ist in der Lage, die Positionen des unteren Auftriebskörpers 94 und des oberen Auftriebskörpers 95 praktisch gleichzeitig zu messen. Die Verwendung des unteren Auftriebskörpers 94 ist im Ausführungsbeispiel nur deshalb möglich, weil sich die untere Flüssigkeit 84 und die mittlere Flüssigkeit 86 in ihrer Dichte in ausreichendem Maße unterscheiden, so dass der untere Auftriebskörper 94 stabil seine Position an der Grenze 85 einnimmt. Eine gemeinsame Betriebselektronik befindet sich in einem Gehäuse 96, das über ein Zwischenstück 97 mit der Elektrode 90 verbunden ist.

Bei der Anordnung gemäß Figur 7 erfasst der untere Auftriebskörper 94 praktisch direkt eine Länge, die dem Widerstand R_{A} aus Figur 3 entspricht. Die Schichtdicke der mittleren Flüssigkeit 86 kann dann über die potentiometrische Messmethode ermittelt werden, wie zuvor beschrieben, wobei der Spannungsabfall bei dem Widerstand R_{A} berücksichtigt wird. Den Gesamtfüllstand und somit auch die Schichtdicke der oberen Flüssigkeit 88 erhält man aus der Position des oberen Auftriebskörpers 95.

Das Verfahren und die Vorrichtung zur Bestimmung von Füllständen übereinander befindlicher Flüssigkeiten in einem Behälter lassen sich bei einer Vielzahl unterschiedlicher Anordnungen der Flüssigkeitsschichten anwenden. Die beschriebenen Beispiele verdeutlichen, wie dies im Einzelnen durchgeführt werden kann. Es sind auch Anordnungen mit mehr als drei Flüssigkeiten denkbar.

## Patentansprüche

1. Vorrichtung zur Bestimmung von Füllständen übereinander befindlicher Flüssigkeitsschichten (4, 6; 54, 56; 84, 86, 88) in einem Behälter (2; 52; 70; 82), wobei eine Flüssigkeitsschicht (4; 54; 56; 86) elektrisch leitend ist, mit
- einem magnetostriktiven Positionsmesssystem (30, 32) mit einem Messdraht (30) und einer ersten Betriebselektronik (32) und
- mindestens einem Auftriebskörper (34; 64; 94, 95) mit einem Magneten (36), der auf das magnetostriktive Positionsmesssystem (30, 32) abgestimmt und dazu eingerichtet ist, an einer Grenze (7; 57; 85, 89) zwischen zwei Schichten unterschiedlicher Dichte zu schwimmen,
**gekennzeichnet**
- **durch** ein potentiometrisches Messsystem mit einer Elektrode (10; 60; 90) mit zwei Enden (28, 29; 62, 63; 72, 73; 92, 93), die einen Widerstand bildet und dazu eingerichtet ist, in die Flüssigkeit einzutauchen, mit einer Gegenelektrode (20) und mit einer zweiten Betriebselektronik,
- und **dadurch**, dass
- entweder die Elektrode (10; 60; 90) als Führungsrohr für den mindestens einen Auftriebskörper (34; 64; 94, 95) gestaltet ist, wobei der Messdraht (30) des magnetostriktiven Positionsmesssystems (30, 32) durch den Innenraum der Elektrode (10; 60; 90) geführt ist,
- oder die Gegenelektrode als Führungsrohr für den mindestens einen Auftriebskörper gestaltet ist, wobei die Wandung der Gegenelektrode durchbrochen ist, um den Zutritt von Flüssigkeit zu der im Innenraum der Gegenelektrode und vorzugsweise konzentrisch dazu angeordneten Elektrode zu gewährleisten, die rohrförmig gestaltet ist und in ihrem Innenraum den Messdraht des magnetostriktiven Positionsmesssystems enthält.

2. Vorrichtung nach Anspruch 1, **dadurch gekennzeichnet, dass** die Quelle (22) für den zeitlich veränderlichen Strom des potentiometrischen Messsystems eine 4-20mA-Schnittstelle aufweist.

3. Vorrichtung nach Anspruch 1 oder 2, wobei die Elektrode (10; 60; 90) als Führungsrohr für den mindestens einen Auftriebskörper (34; 64; 94, 95) gestaltet ist und der Messdraht (30) des magnetostriktiven Positionsmesssystems (30, 32) durch den Innenraum der Elektrode (10; 60; 90) geführt ist, **dadurch gekennzeichnet, dass** die Gegenelektrode (20) auf eine der folgenden Arten ausgebildet ist: stabförmig, stabförmig und parallel zu der Elektrode angeordnet, rohrförmig und konzentrisch zu der Elektrode angeordnet.

4. Vorrichtung nach Anspruch 1 oder 2, wobei die Elektrode (10; 60; 90) als Führungsrohr für den mindestens einen Auftriebskörper (34; 64; 94, 95) gestaltet ist und der Messdraht (30) des magnetostriktiven Positionsmesssystems (30, 32) durch den Innenraum der Elektrode (10; 60; 90) geführt ist, **dadurch gekennzeichnet, dass** die Behälterwandung als Gegenelektrode ausgebildet ist.

5. Vorrichtung nach einem der Ansprüche 1 bis 4, **dadurch gekennzeichnet, dass** die elektrische Verbindung (26) zu einem Ende (28) der Elektrode (10) auch als Rückführung für den Messdraht (30) des magnetostriktiven Positionsmesssystems (30, 32) verwendet ist.

6. Vorrichtung nach einem der Ansprüche 1 bis 5, **dadurch gekennzeichnet, dass** zumindest ein Teil der ersten Betriebselektronik (32) und zumindest ein Teil der zweiten Betriebselektronik in einem gemeinsamen Gehäuse (18; 66; 96) untergebracht sind.

7. Vorrichtung nach Anspruch 6, **dadurch gekennzeichnet, dass** die Elektrode (20) im Bereich eines ihrer Enden (29) an einer elektrisch isolierenden Durchführung (14) angeordnet ist und dass das gemeinsame Gehäuse (18) an der der Elektrode (10) gegenüberliegenden Seite der Durchführung (14) mechanisch mit der Durchführung (14) verbunden ist.

8. Vorrichtung nach einem der Ansprüche 1 bis 7, **dadurch gekennzeichnet, dass** zumindest ein Teil der ersten Betriebselektronik (32) und zumindest ein Teil der zweiten Betriebselektronik identisch sind.

9. Verfahren zum Bestimmen von Füllständen übereinander befindlicher Flüssigkeitsschichten (4, 6; 54, 56; 84, 86, 88) in einem Behälter (2; 52; 70; 82), wobei eine Flüssigkeitsschicht (4; 54; 56; 86) elektrisch leitend ist, mittels einer Vorrichtung nach Anspruch 1, mit den Schritten:
- Bestimmen der Position mindestens einer Grenze (7; 57; 85, 89) zwischen zwei Schichten unterschiedlicher Dichte mittels eines jeweiligen an der Grenze (7; 57; 85, 89) schwimmenden und einen Magneten (36) aufweisenden Auftriebskörpers (34; 64; 94, 95), dessen Position mit einem magnetostriktiven Positionsmesssystem (30, 32) erfasst wird,
- Bestimmen der Schichtdicke der elektrisch leitenden Flüssigkeitsschicht (4; 54; 56; 86) mit einer potentiometrischen Messmethode, bei der eine Elektrode (10; 60; 90) mit zwei Enden (28, 29; 62, 63; 72, 73; 92, 93), die einen Widerstand bildet und durch die ein zeitlich veränderlicher Strom geleitet wird, in die Flüssigkeit eintaucht, wobei eine Potentialdifferenz zu einer Gegenelektrode (20) ein Maß für die Schichtdicke der elektrisch leitenden Flüssigkeitsschicht (4; 54; 56; 86) bereitstellt.

10. Verfahren nach Anspruch 9, **dadurch gekennzeichnet, dass** die Position der Grenze (7; 57; 89) zwischen der obersten Flüssigkeitsschicht (6; 56; 88) und dem über der Flüssigkeit befindlichen Gas mittels eines einen Magneten (36) aufweisenden Auftriebskörpers (34) und dem magnetostriktiven Positionsmesssystem (30, 32) erfasst wird.

11. Verfahren nach Anspruch 9 oder 10, **dadurch gekennzeichnet, dass** der zeitlich veränderliche Strom pulsartig angelegt wird.

12. Verfahren nach Anspruch 11, **dadurch gekennzeichnet, dass** der zeitliche Verlauf einer für die Potentialdifferenz charakteristischen Spannung aufgezeichnet und in den Pausen zwischen aufeinander folgenden Strompulsen zum Bestimmen der Schichtdicke der elektrisch leitenden Flüssigkeitsschicht (4; 54; 56; 86) ausgewertet wird.

13. Verfahren nach einem der Ansprüche 9 bis 12, **dadurch gekennzeichnet, dass** die elektrisch leitende Flüssigkeitsschicht (4; 54) zuunterst angeordnet ist und eine für die Potentialdifferenz zwischen dem auch bei niedrigem Füllstand in die Flüssigkeit eintauchenden unteren Ende (28; 62; 72) der Elektrode (10; 60) und der Gegenelektrode (20) charakteristische Spannung bestimmt wird.

14. Verfahren nach Anspruch 13, **dadurch gekennzeichnet, dass** der Behälter (2; 52) ein Lagertank auf einer Tankstelle, die elektrisch nicht leitende Flüssigkeit (6; 56) Kraftstoff und die elektrisch leitende Flüssigkeit (4; 54) Wasser oder ein Alkohol/Wasser-Gemisch ist, das sich über dem Boden des Lagertanks ansammelt.

15. Verfahren nach einem der Ansprüche 9 bis 12, **dadurch gekennzeichnet, dass** die elektrisch leitende Flüssigkeitsschicht (56) zuoberst angeordnet ist, dass eine für die Potentialdifferenz zwischen einem Ende (62) der Elektrode (60) und der Gegenelektrode charakteristische Spannung bestimmt wird, und dass diese Potentialdifferenz vor dem Bestimmen der Schichtdicke (d) der elektrisch leitenden Flüssigkeitsschicht (56) um den Spannungsabfall längs der Elektrode (60) in einem elektrisch nicht leitenden Bereich (54) zwischen dem genannten Ende (62) der Elektrode (60) und der Grenze (55) zu der elektrisch leitenden Flüssigkeitsschicht (56) korrigiert wird, wobei zum Korrigieren die von dem magnetostriktiven Positionsmesssystem erfasste Position eines einen Magneten aufweisenden Auftriebskörpers (64) verwendet wird.

16. Verfahren nach einem der Ansprüche 9 bis 12, **dadurch gekennzeichnet, dass** mindestens drei Flüssigkeitsschichten (84, 86, 88) vorhanden sind und die elektrisch leitende Flüssigkeitsschicht (86) zwischen einer oberen Grenze (87) und einer unteren Grenze (85) zwischen zwei elektrisch nicht leitenden Flüssigkeitsschichten (88, 84) angeordnet ist, dass die Position einer dieser Grenzen (85) mittels eines einen Magneten aufweisenden Auftriebskörpers (94) und dem magnetostriktiven Positionsmesssystem erfasst wird, dass eine für die Potentialdifferenz zwischen dem außerhalb der elektrisch leitenden Flüssigkeitsschicht (86) auf der Seite dieses Auftriebskörpers (94) befindlichen Ende (92) der Elektrode (90) und der Gegenelektrode charakteristische Spannung bestimmt wird und dass diese Potentialdifferenz vor dem Bestimmen der Schichtdicke der elektrisch leitenden Flüssigkeit (86) um den Spannungsabfall längs der Elektrode zwischen dem genannten Ende (92) der Elektrode (90) und der genannten Position der Grenze (85) korrigiert wird.

17. Verfahren nach einem der Ansprüche 9 bis 16, **dadurch gekennzeichnet, dass** eine für die Potentialdifferenz zwischen einem (28) der Enden der Elektrode (10) und der Gegenelektrode (20) charakteristische erste Spannung (24) und eine für die Potentialdifferenz zwischen dem anderen Ende (29) der Elektrode (10) und der Gegenelektrode (20) charakteristische zweite Spannung (44) bestimmt wird.

18. Verfahren nach Anspruch 17, **dadurch gekennzeichnet, dass** aus dem Vergleich der ersten Spannung (24) mit der zweiten Spannung (44) die Einbaulage der Elektrode (10) bestimmt wird, insbesondere, ob die Elektrode (10) von oben oder von unten in die Flüssigkeit eingeführt ist.

19. Verfahren nach einem der Ansprüche 9 bis 18, **dadurch gekennzeichnet, dass** für die Quelle (22) des zeitlich veränderlichen Stroms eine 4-20mA-Schnittstelle verwendet wird.

20. Verfahren nach einem der Ansprüche 9 bis 19, **dadurch gekennzeichnet, dass** für den elektrischen Widerstand zwischen der Elektrode (10) und der Gegenelektrode (20) charakteristische Größen gemessen werden und dass daraus und mittels der von der Schichtdicke der elektrisch leitenden Flüssigkeitsschicht (4) abhängenden Geometrie der Feldverteilung zwischen Elektrode (10) und Gegenelektrode (20) die elektrische Leitfähigkeit der elektrisch leitenden Flüssigkeit (4) bestimmt wird, wobei optional das Ergebnis für die elektrische Leitfähigkeit oder ein Maß dafür als charakteristisches Merkmal der elektrisch leitenden Flüssigkeit ausgewertet wird.

21. Verfahren nach Anspruch 20, **dadurch gekennzeichnet, dass** die elektrisch leitende Flüssigkeit ein alkoholhaltiger Kraftstoff ist und dass dessen elektrische Leitfähigkeit bestimmt und zur Ermittlung des Alkoholgehalts ausgewertet wird, wobei im unteren Bereich des Behälters keine ausgefallene alkoholartige Wasserphase vorhanden ist oder erkannt wird, und wobei optional der ermittelte Alkoholgehalt angezeigt und/oder, falls der ermittelte Alkoholgehalt außerhalb vorgegebener Bereichsgrenzen liegt, ein Alarm abgegeben wird.

22. Verfahren nach Anspruch 20 oder 21, **dadurch gekennzeichnet, dass** die elektrisch leitende Flüssigkeit ein alkoholhaltiger Kraftstoff ist und dass dessen elektrische Leitfähigkeit bestimmt und zur Ermittlung eines etwaigen Wassergehalts ausgewertet wird, wobei im unteren Bereich des Behälters keine ausgefallene alkoholartige Wasserphase vorhanden ist oder erkannt wird, und wobei optional der ermittelte Wassergehalt angezeigt und/oder, falls der ermittelte Wassergehalt außerhalb vorgegebener Bereichsgrenzen liegt, ein Alarm abgegeben wird.

## Claims

1. Apparatus for the determination of fill levels of liquid layers (4, 6; 54, 56; 84, 86, 88) arranged on top of each other in a container (2; 52; 70; 82), one liquid layer (4; 54; 56; 86) being electrically conductive, comprising
- a magnetostrictive position measuring system (30, 32) comprising a measuring wire (30) and first operating electronics (32) and
- at least one buoyancy body (34; 64; 94, 95) having a magnet (36) adjusted to the magnetostrictive position measuring system (30, 32) and being adapted to float at a boundary (7; 57; 85, 89) between two layers of different density,
**characterized**
- **by** a potentiometric measuring system comprising an electrode (10; 60; 90) having two ends (28, 29; 62, 63; 72, 73; 92, 93), which forms a resistor and is adapted to immerse in the liquid, a counter electrode (20) and second operating electronics,
- and in that
- either the electrode (10; 60; 90) is designed as a guiding tube for the at least one buoyancy body (34; 64; 94, 95), the measuring wire (30) of the magnetostrictive position measuring system (30, 32) being guided through the interior space of the electrode (10; 60; 90),
- or the counter electrode is designed as a guiding tube for the at least one buoyancy body, the wall of the counter electrode being perforated to provide access of liquid to the electrode arranged in the interior space of the counter electrode, preferably concentrically thereto, the electrode having a tubular shape and containing, in its interior space, the measuring wire of the magnetostrictive position measuring system.

2. Apparatus according to claim 1, **characterized in that** the source (22) for the temporally varying current of the potentiometric measuring system comprises a 4-20mA interface.

3. Apparatus according to claim 1 or 2, wherein the electrode (10; 60; 90) is designed as guiding tube for the at least one buoyancy body (34; 64; 94, 95) and the measuring wire (30) of the magnetostrictive position measuring system (30, 32) is guided through the interior space of the electrode (10; 60; 90), **characterized in that** the counter electrode (20) is formed in one of the following ways: rod-shaped, rod-shaped and arranged in parallel to the electrode, rod-shaped and arranged concentrically to the electrode.

4. Apparatus according to claim 1 or 2, wherein the electrode (10; 60; 90) is designed as guiding tube for the at least one buoyancy body (34, 64; 94, 95) and the measuring wire (30) of the magnetostrictive position measuring system (10, 32) is guided through the interior space of the electrode (10; 60; 90), **characterized in that** the container wall is formed as a counter electrode.

5. Apparatus according to anyone of claims 1 to 4, **characterized in that** the electrical connection (26) to one end (28) of the electrode (10) is also used as return connection for the measuring wire (30) of the magnetostrictive position measuring system (30, 32).

6. Apparatus according to anyone of claims 1 to 5, **characterized in that** at least part of the first operating electronics (32) and at least part of the second operating electronics are accommodated in a common casing (18; 66; 96).

7. Apparatus according to claim 6, **characterized in that** the electrode (20), in the area of one of its ends (29) is arranged at an electrically isolating feedthrough (14) and **in that** the common casing (18) is mechanically connected to the feedthrough (14) at the side of the feedthrough (14) opposite to the electrode (10).

8. Apparatus according to anyone of claims 1 to 7, **characterized in that** at least part of the first operating electronics (32) and at least part of the second operating electronics are identical.

9. Process for determining the fill levels of liquid layers (4, 6; 54, 56; 84, 86, 88) arranged in a container (2; 52; 70; 82) on top of each other, one liquid layer (4; 54; 56; 86) being electrically conductive, by means of an apparatus according to claim 1, comprising the steps:
- determining the position of at least one boundary (7; 57; 85, 89) between two layers of different density by means of a respective buoyancy body (34; 64; 94, 95) floating at the boundary (7; 57; 85, 89) and comprising a magnet (36), the position of the respective buoyancy body being detected by a magnetostrictive position measuring system (30, 32)
- determining the layer thickness of the electrically conducting liquid layer (4; 54; 56; 86) by means of a potentiometric measuring method, in which an electrode (10; 60; 90) having two ends (28, 29; 62, 63; 72, 73; 92, 93), which forms a resistor and through which a temporally varying current is conducted, immerses in the liquid, a potential difference to a counter electrode (20) providing a measure for the layer thickness of the electrically conducting liquid layer (4; 54; 56; 86).

10. Process according to claim 9, **characterized in that** the position of the boundary (7, 57, 89) between the uppermost liquid layer (6; 56; 88) and the gas located above the liquid is detected by means of a buoyancy body (34) comprising a magnet (36) and the magnetostrictive position measuring system (30, 32).

11. Process according to claim 9 or 10, **characterized in that** the temporally varying current is applied pulse-like.

12. Process according to claim 11, **characterized in that** the temporal course of a voltage characteristic for the potential difference is recorded and is evaluated in the pauses between subsequent current pulses in order to determine the layer thickness of the electrically conducting liquid layer (4; 54; 56; 86).

13. Process according to anyone of claims 9 to 12, **characterized in that** the electrically conducting liquid layer (4; 54) is located right at the bottom and a voltage characteristic for the potential difference between the lower end (28; 62; 72) of the electrode (10; 60), which immerses in the liquid also at a low fill level, and the counter electrode (20) is determined.

14. Process according to claim 13, **characterized in that** the container (2; 52) is a storage tank at a filling station, the electrically non-conducting liquid (6; 56) is fuel and the electrically conducting liquid (4; 54) is water or an alcohol/water mixture collecting above the bottom of the storage tank.

15. Process according to anyone of claims 9 to 12, **characterized in that** the electrically conducting liquid layer (56) is arranged uppermost, **in that** a voltage characteristic for the potential difference between one end (62) of the electrode (60) and the counter electrode is determined, and **in that** said potential difference is corrected by the voltage drop along the electrode (60) in an electrically non-conducting area (54) between said end (62) of the electrode (60) and the boundary (55) to the electrically conducting liquid layer (56), before the layer thickness (d) of the electrically conducting liquid layer (56) is determined, wherein for performing the correction the position, detected by the magnetostrictive position measuring system, of a buoyancy body (64) comprising a magnet is used.

16. Process according to anyone of claims 9 to 12, **characterized in that** there are at least three liquid layers (84, 86, 88) and the electrically conducting liquid layer (86) is arranged between an upper boundary (87) and a lower boundary (85) between two electrically non-conducting liquid layers (88, 84), **in that** the position of one of these boundaries (85) is detected by means of a buoyancy body (94) comprising a magnet and the magnetostrictive position measuring system, **in that** a voltage characteristic for the potential difference between the end (92) of the electrode (90) being outside of the electrically conducting liquid layer (86) at the side of said buoyancy body (94) and the counter electrode is determined, and **in that** said potential difference is corrected by the voltage drop along the electrode between said end (92) of the electrode (90) and said position of the boundary (85), before the layer thickness of the electrically conducting liquid (86) is determined.

17. Process according to anyone of claims 9 to 16, **characterized in that** a first voltage (24) characteristic for the potential difference between one (28) of the ends of the electrode (10) and the counter electrode (20) and a second voltage (44) characteristic for the potential difference between the other end (29) of the electrode (10) and the counter electrode (20) is determined.

18. Process according to claim 17, **characterized in that**, by means of the comparison of the first voltage (24) to the second voltage (44), the mounting position of the electrode (10) is determined, in particular whether the electrode (10) is introduced into the liquid from above or from below.

19. Process according to anyone of claims 9 to 18, **characterized in that** a 4-20mA interface is used for the source (22) of the temporally varying current.

20. Process according to anyone of claims 9 to 19, **characterized in that** quantities characteristic for the electrical resistance between the electrode (10) and the counter electrode (20) are measured and **in that** by means of that and by means of the geometry of the field distribution between electrode (10) and counter electrode (20) depending on the layer thickness of the electrically conducting liquid layer (4) the electrical conductivity of the electrically conducting liquid (4) is determined, wherein optionally the result for the electrical conductivity or a measure thereof is evaluated as a characteristic feature of the electrically conducting liquid.

21. Process according to claim 20, **characterized in that** the electrically conducting liquid is an alcohol-containing fuel and that the electrical conductivity thereof is determined and is evaluated for determining the alcohol content, wherein in the lower region of the container there is no or there is not recognized a precipitated alcoholic water phase, and wherein optionally the determined alcohol content is indicated and/or, in case the determined alcohol content is outside of pre-selected range limits, an alarm is emitted.

22. Process according to claim 20 or 21, **characterized in that** the electrically conducting liquid is an alcohol-containing fuel and **in that** the electrical conductivity thereof is determined and is evaluated for determining a possible water content, wherein in the lower region of the container there is no or there is not recognized a precipitated alcoholic water phase, and wherein optionally the water content determined is indicated and/or, in case the determined water content is outside of pre-selected range limits, an alarm is emitted.

## Revendications

1. Dispositif destiné à la détermination de niveaux de remplissage de couches de liquide (4, 6; 54, 56; 84, 86, 88) placées les unes sur les autres dans un récipient (2; 52; 70; 82), où une couche de liquide (4; 54; 56; 86) est électriquement conductrice, comprenant :
- un système de mesure de position magnétostrictif (30, 32) comportant un fil de mesure (30) et une première électronique de service (32), et
- au moins un flotteur (34; 64; 94, 95) doté d'un aimant (36) qui est accordé avec le système de mesure de position magnétostrictif (30, 32) et est agencé pour flotter à une interface (7;57; 85, 89) entre deux couches de densités différentes, **caractérisé en ce**
- **qu'**il comporte un système de mesure potentiométrique comprenant une électrode (10; 60; 90) avec deux extrémités (28, 29; 62, 63; 72, 73; 92; 93), qui forme une résistance et est agencée pour plonger dans le liquide, comprenant une contre-électrode (20) et comprenant une deuxième électronique de service,
- et en ce que
- soit l'électrode (10; 60; 90) est configurée comme tube de guidage pour le flotteur (34; 64; 94, 95), au nombre d'au moins un, et dans ce cas le fil de mesure (30) du système de mesure de position magnétostrictif (30, 32) passe à l'intérieur de l'électrode (10; 60; 90),
- soit la contre-électrode est configurée comme tube de guidage pour le flotteur, au nombre d'au moins un, et dans ce cas la paroi de la contre-électrode est percée pour garantir l'arrivée de liquide jusqu'à l'électrode qui est disposée à l'intérieur de la contre-électrode, de préférence de façon concentrique à celle-ci et qui est réalisée sous une forme tubulaire et contient dans son espace intérieur le fil de mesure du système de mesure de position magnétostrictif.

2. Dispositif selon la revendication 1, **caractérisé en ce que** la source (22) pour le courant variable dans le temps du système de mesure potentiométrique présente une interface 4-20 mA.

3. Dispositif selon la revendication 1 ou 2, dans lequel l'électrode (10; 60; 90) est configurée comme tube de guidage pour le flotteur (34; 64; 94, 95), au nombre d'au moins un, et le fil de mesure (30) du système de mesure de position magnétostrictif (30, 32) passe à l'intérieur de l'électrode (10; 60; 90), **caractérisé en ce que** la contre-électrode (20) est réalisée sous l'une des formes suivantes : sous forme de barre, sous forme de barre et disposée parallèlement à l'électrode, sous forme de tube et disposée de façon concentrique à l'électrode.

4. Dispositif selon la revendication 1 ou 2, dans lequel l'électrode (10; 60; 90) est configurée comme tube de guidage pour le flotteur (34; 64; 94, 95), au nombre d'au moins un, et le fil de mesure (30) du système de mesure de position magnétostrictif (30, 32) passe dans l'espace intérieur de l'électrode (10; 60; 90), **caractérisé en ce que** la paroi du récipient est réalisée comme contre-électrode.

5. Dispositif selon l'une des revendications 1 à 4, **caractérisé en ce que** la liaison électrique (26) avec une extrémité (28) de l'électrode (10) est également utilisée comme retour pour le fil de mesure (30) du système de mesure de position magnétostrictif (30, 32).

6. Dispositif selon l'une des revendications 1 à 5, **caractérisé en ce qu'**au moins une partie de la première électronique de service (32) et au moins une partie de la deuxième électronique de service sont logées dans un boîtier (18; 66; 96) commun.

7. Dispositif selon la revendication 6, **caractérisé en ce que** l'électrode (20) est disposée, dans la région de l'une de ses extrémités (29), sur une traversée (14) électriquement isolante, et **en ce que** le boîtier (18) commun, sur le côté de la traversée (14) qui est opposé à l'électrode (10), est relié mécaniquement à la traversée (14).

8. Dispositif selon l'une des revendications 1 à 7, **caractérisé en ce qu'**au moins une partie de la première électronique de service (32) et au moins une partie de la deuxième électronique de service sont identiques.

9. Procédé de détermination de niveaux de remplissage de couches de liquide (4, 6; 54, 56; 84, 86, 88) dans un récipient (2; 52; 70; 82), où une couche de liquide (4; 54; 56; 86) est électriquement conductrice, au moyen d'un dispositif selon la revendication 1, comprenant les étapes suivantes :
- détermination de la position d'au moins une interface (7; 57; 85, 89) entre deux couches d'épaisseurs différentes au moyen d'un flotteur (34; 64; 94, 95) respectif qui flotte à l'interface (7; 57; 85, 89) et présente un aimant (36) et dont la position est détectée avec un système de mesure de position magnétostrictif (30, 32),
- détermination de l'épaisseur de couche de la couche de liquide (4; 54; 56; 86) électriquement conductrice avec une méthode de mesure potentiométrique, selon laquelle une électrode (10; 60; 90), comportant deux extrémités (28, 29; 62, 63; 72, 73; 92; 93), qui forme une résistance et dans laquelle on fait passer un courant variable dans le temps, est plongée dans le liquide, où une différence de potentiel avec une contre-électrode (20) constitue une mesure de l'épaisseur de couche de la couche de liquide (4; 54; 56; 86) électriquement conductrice.

10. Procédé selon la revendication 9, **caractérisé en ce que** la position de l'interface (7; 57; 89) entre la couche de liquide (6; 56; 86) la plus haute et le gaz se trouvant au-dessus du liquide est détectée à l'aide d'un flotteur (34), présentant un aimant (36), et le système de mesure de position magnétostrictif (30, 32).

11. Procédé selon la revendication 9 ou 10, **caractérisé en ce que** le courant variable dans le temps est appliqué par impulsions.

12. Procédé selon la revendication 11, **caractérisé en ce que** la variation dans le temps d'une tension caractéristique de la différence de potentiel est enregistrée et est évaluée dans les pauses entre des impulsions de courant successives, en vue de déterminer l'épaisseur de couche de la couche de liquide (4; 54; 56; 86) électriquement conductrice.

13. Procédé selon l'une des revendications 9 à 12, **caractérisé en ce que** la couche de liquide (4; 54) électriquement conductrice est disposée tout en bas et qu'une tension caractéristique de la différence de potentiel entre l'extrémité inférieure (28; 62; 72) de l'électrode (10; 60), plongée dans le liquide même en cas de niveau de remplissage bas, et la contre-électrode (20) est déterminée.

14. Procédé selon la revendication 13, **caractérisé en ce que** le récipient (2; 52) est une cuve de stockage d'une station-service, que le liquide (6; 56) non conducteur électrique est du carburant, et que le liquide (4; 54) électriquement conducteur est de l'eau ou un mélange alcool/eau qui s'accumule au-dessus du fond de la cuve de stockage.

15. Procédé selon l'une des revendications 9 à 12, **caractérisé en ce que** la couche de liquide (56) électriquement conductrice est disposée tout en haut, **en ce qu'**une tension caractéristique de la différence de potentiel entre une extrémité (62) de l'électrode (60) et la contre-électrode est déterminée, et **en ce que**, avant la détermination de l'épaisseur de couche (d) de la couche de liquide (56) électriquement conductrice, cette différence de potentiel est corrigée de la chute de tension le long de l'électrode (60) dans une zone (54) électriquement non conductrice entre ladite extrémité (62) de l'électrode (60) et l'interface (55) avec la couche de liquide (56) électriquement conductrice, où l'on utilise pour la correction la position, détectée par le système de mesure de position magnétostrictif, d'un flotteur (64) présentant un aimant.

16. Procédé selon l'une des revendications 9 à 12, **caractérisé en ce qu'**il existe au moins trois couches de liquide (84, 86, 88) et la couche de liquide (86) électriquement conductrice est disposée entre une interface supérieure (87) et une interface inférieure (85), entre deux couches de liquide (88, 84) électriquement non conductrices, **en ce que** la position de l'une de ces interfaces (85) est détectée à l'aide d'un flotteur (94), présentant un aimant, et du système de mesure de position magnétostrictif, **en ce que** l'on détermine une tension qui est caractéristique de la différence de potentiel entre l'extrémité (92) de l'électrode (90) située à l'extérieur de la couche de liquide (86) électriquement conductrice, sur le côté de ce flotteur (94), et la contre-électrode, et **en ce que**, avant la détermination de l'épaisseur de couche du liquide (86) électriquement conducteur, cette différence de potentiel est corrigée de la chute de tension le long de l'électrode entre ladite extrémité (92) de l'électrode (90) et ladite position de l'interface (85).

17. Procédé selon l'une des revendications 9 à 16, **caractérisé en ce que** l'on détermine une première tension (24), qui est caractéristique de la différence de potentiel entre l'une (28) des extrémités de l'électrode (10) et la contre-électrode (20), et une deuxième tension (44) qui est caractéristique de la différence de potentiel entre l'autre extrémité (29) de l'électrode (10) et la contre-électrode (20).

18. Procédé selon la revendication 17, **caractérisé en ce que** l'on détermine la position de montage de l'électrode (10) à partir de la comparaison de la première tension (24) avec la deuxième tension (44), en particulier si l'électrode (10) est introduite dans le liquide d'en haut ou d'en bas.

19. Procédé selon l'une des revendications 9 à 18, **caractérisé en ce que** l'on utilise une interface 4-20 mA pour la source (22) du courant variable dans le temps.

20. Procédé selon l'une des revendications 9 à 19, **caractérisé en ce que** l'on mesure des grandeurs caractéristiques de la résistance électrique entre l'électrode (10) et la contre-électrode (20), et **en ce que** l'on détermine, à partir de celles-ci et à l'aide de la géométrie de la répartition de champ entre l'électrode (10) et la contre-électrode (20) qui est fonction de l'épaisseur de couche de la couche de liquide (4) électriquement conductrice, la conductivité électrique de la couche de liquide (4) électriquement conductrice, où l'on évalue de manière facultative le résultat pour la conductivité électrique ou une mesure de celle-ci, en tant que propriété caractéristique du liquide électriquement conducteur.

21. Procédé selon la revendication 20, **caractérisé en ce que** le liquide électriquement conducteur est un carburant contenant de l'alcool et **en ce que** la conductivité électrique de celui-ci est mesurée et évaluée pour déterminer la teneur en alcool, sachant que dans la partie inférieure du récipient, il n'y a pas de phase aqueuse précipitée de type alcool ou bien elle n'est pas détectée, et sachant que, de manière facultative, la teneur en alcool déterminée est indiquée et/ou une alarme est émise dans le cas où la teneur en alcool déterminée se situe en dehors de limites prédéterminées.

22. Procédé selon la revendication 20 ou 21, **caractérisé en ce que** le liquide électriquement conducteur est un carburant contenant de l'alcool et **en ce que** la conductivité électrique de celui-ci est mesurée et évaluée pour déterminer une éventuelle teneur en eau, sachant que dans la partie inférieure du récipient, il n'y a pas de phase aqueuse précipitée de type alcool ou bien elle n'est pas détectée, et sachant que, de manière facultative, la teneur en eau déterminée est indiquée et/ou une alarme est émise dans le cas où la teneur en alcool déterminée se situe en dehors de limites prédéterminées.
